# EUROPEAN PATENT SPECIFICATION

(11) **EP 2 261 022 B1**
(45) Date of publication and mention of the grant of the patent: **14.08.2013**
(21) Application number: 10165824.3
(22) Date of filing: 14.06.2010
(51) Int. Cl.: B32B 1/08, B32B 27/00, B32B 27/08, B32B 9/02

(54) **Degradable film**
Abbaubare Folie
Film dégradable

(30) Priority: 12.06.2009 EP 09162587
(43) Date of publication of application: 15.12.2010
(73) Proprietor: Flexopack S.A., 194 00 Koropi (GR)
(72) Inventor: Gkinosatis, Dimitris, 19400, Koropi Attica (GR)
(74) Representative: Isarpatent

(56) References cited:
- EP-A2- 1 022 127
- DE-A1- 19 632 799
- DE-A1- 19 954 404
- JP-A- 7 285 192

## Description

The present invention refers to a polymeric film comprising odor barrier material being degradable and being able to pack malodorous waste.

A lot of waste products produce smells that are annoying to the environment. Examples are decayed food, kid nappies and cat litter.

In the prior art, there are many films that could be used for protection from malodors. As well known in the art, the use of materials like EVOH, PVDC, polyacrylonitrile is recommended in order to not allow malodors escape from the container (e.g. bag or other configuration) and create an unpleasant atmosphere.

There are also a lot of known configurations of packing a certain length of film (e.g. 20 meters) in a compressed form (e.g. in a cassette). Examples of representative cassettes are shown in US 4,934,529 or US 3,356,192.

Generally the cassette comprises a tubular core, casing wall and cassette bottom. The film is pulled through the area between the lid of the cassette and the casing wall. The flexible tubing is dispensed from the cassette. After the malodorous item is thrown into the bag the core is rotated and the flexible tube is twisted so that it closes as hermetically as possible the waste/environment area.

To dispose the next diaper the user pushes the next portion of film. The previous hermetically closed diaper is pushed downwards and the new diaper is packed in a new configuration. All these different packs are stored in a bin which is periodically emptied.

Separation of one pack to the other can be done by various means. A rotary knife is preferred.

In the prior art, a lot of possible film configurations either monolayer or multilayer have been proposed. The basic characteristics a film should have in order to be used in accordance with the invention are:
1. Barrier to odours;
2. Proper deadfold properties (non resilient) so that is compressed efficiently in the cassette;
3. Good tear resistance in both directions.

However, the materials used by the aforementioned techniques of prior art technology present the following problems:
* Disposed packed items (eg.diapers) are not accepted by landfill management due to the non degrading nature of the packaging materials.
* Films are too "heavy" meaning that their mass generally exceeds 19 grams per square meter of surface.

We have surprisingly found that all these features can be achieved with a very lightweight multilayer film with grammage less than 19 grs/square meter. This is extremely beneficial for the environment as multilayer films are extremely difficult to be produced with so small weight per surface.

### SUMMARY OF THE INVENTION

The invention provides a film suitable for malodorous item packaging with an outer and an inner layer which both comprise at least one biodegradable polymer material, where the weight of the film is less than 19 grams per square meter.

Preferred embodiments of the invention are disclosed on the following pages and the claims in combination with the examples.

The invention comprises in a preferred embodiment a multilayer film comprising
1. More than 3 layers;
2. An outer and an inner layer comprising at least one biodegradable polymer material;
3. An oxygen barrier layer;
4. Two adhesive tie layers between the two outer layers and the oxygen barrier layer.

### Definitions:

In this application, the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured in water according to ASTM 2732. For temperatures like 100°C or more, glycerin is used as a reference liquid.

The term "total heat shrinkability" refers to the sum of heat shrinkability at the MD direction and heat shrinkability at the TD direction. In all cases, ASTM 2732 is used for measurement of shrinkabilities.

The term "multilayer" refers to a film comprising 3 or more layers.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY^{®} from DOW or Exact^{®} from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" or EVA refer to copolymers of ethylene and vinyl acetate.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein the term PVOH refers to polyvinyl alcohol, a polymer produced from alcoholysis of polyvinyl acetate.

As used herein the term "degradable" comprises at least one of the following properties: biodegradable, photodegradable, oxidatively degradable and hydrolytically degradable which all will be explained in further detail below.

As used herein the term "biodegradable" refers to a degradable plastic in which the degradation results from the action of naturally occurring microorganisms such as bacterial, fungi and algae. A generally used standard to characterize if a material is biodegradable or not is the European Norm 13432.

As used herein the term "photodegradable" refers to degradable plastics in which the degradation results from the action of natural daylight.

As used herein the term "oxidatively degradable" refers to degradable plastics in which the degradation results from oxidation.

As used herein the term "hydrolytically degradable plastics" refers to degradable plastics in which the degradation results from hydrolysis.

As used herein the term "oxygen barrier layer" refers to a polymeric layer comprising an oxygen barrier material. Oxygen barrier materials include EVOH (ethylene vinyl alcohol), PVOH (polyvinyl alcohol), PA (polyamide) and other materials known from the person skilled in the art.

As used herein the term "adhesive tie layer" refers to a polymeric film layer used in order to bond two dissimilar film layers. For example, adhesive ties are used to bond polyolefinic layers (e.g. comprising polyethylenes) with oxygen barrier layers (e.g .EVOH).

All measurement methods mentioned herein are readily available for the skilled person. For example, they can be obtained from the American National Standards Institute, e.g. at: www.webstore.ansi.org or from European Bioplastics e.V. Berlin.

### DETAILED DESCRIPTION OF THE INVENTION

According to a first aspect the present invention is directed to a multilayer film suitable for malodorous item packaging with an outer and an inner layer comprising at least one biodegradable polymer material where the weight of the film is less than 19 grams per square meter.

In a prefferd embodiment, a multilayer film according to the invention comprises at least the following layers:

### OUTER LAYER/INTERMEDIATE LAYER/BARRIER LAYER/INTERMEDIATE LAYER/INNER LAYER

wherein both outer and inner layers comprise a biodegradable polymer. This polymer is more preferable to be a starch or a vegetable oil polymer, so coming from renewable processes. A blend of two or more biodegradable polymers is also within the scope of the invention. Another possibility for the polymer is a biodegradable aliphatic polyester.

Typical biodegradable polymers according to the invention are Mater-Bi^{®} polymers from Novamont which are starch based biopolymers or biopolymers based on other renewable sources.

Barrier layer comprises oxygen barrier materials. These are materials that do not allow oxygen to enter a package from which it has been removed (e.g. vacuum). Examples of oxygen barrier materials are EVOH, polyamide etc.

In a preferred version of the invention the barrier material in the barrier layer is hydrolytically degradable. PVOH based polymers are preferable. In case PVOH polymers cannot be coextruded, then they can form a thin coating which is bonded to the rest of the film with special adhesives (lamination process).

In another preferred version of the invention, the barrier layer comprises a blend of starch polymer and EVOH.

In another preferred version of the invention, the barrier layer comprises a blend of EVOH and special additive to increase the oxidative degradation of EVOH.

In the intermediate layers, typical adhesive resins like maleic anhydrite modified polyolefins may be used. Typical examples are BYNEL^{®} from Dupont and OREVAC^{®} from Arkema. In order to facilitate the oxidative degradation of the adhesives, oxidative masterbatches can be used.

Additives well known in the art may be used in one or more layers of the present invention. Slip additives, antiblock additives, antifog, polymer processing aids may be used if pertinent. Antimicrobial additives may also be used in one or more of the layers to inhibit the microbe formation. Preferably the antimicrobial is put on the side where the waste is in direct vicinity.

The object of the invention is to produce the film of the above structure with a weight less than 19 grams per square meter. Preferably the weight is lower than 18 grams per square meter or even lower.

The film may be crosslinked with one of the following methods.

E-beam radiation, gamma radiation, moisture crosslinking using silane grafting compounds, peroxide crosslinking.

The film may be in tubular form or sealed at the edges or single sheet configuration. Centrefold configuration is also possible.

The preferred production method for the film is the how blown film method, which is well known in the art. Other methods like extrusion through flat cast die is also possible.

### EXAMPLES

A 5 layer film is produced in a commercial hot blown film line with the following recipe
Inner layer, 100% P1
Adjacent layer 98% AD 1+ 2% ADD1
Barrier layer EVOH1
Adjacent layer 98% AD1+2% ADD1
Outer layer same as inner layer

### See table 1

The thickness of the structure is 6/1.5/1.5/1.5/6 microns starting from the inner and going to the outer layer.

**TABLE 1**

| Type | Description | Density g/cm³ |
|---|---|---|
| P1 | Biodegradable vegetable oil polymer CF51A (producer NOVAMONT Italy) | 1.2 |
| ADD1 | Oxidative masterbatch from Schulman | |
| EVOH1 | EVOH 38% | 1.17 |
| AD1 | Adhesive resin LLDPE based | |
| EVOH2 | Blend of EVOH and starch polymer | |

### EXAMPLE 2

A 5 layer film is produced in a hot blown film commercial line with the following recipe
Inner layer, 100% P1
Adjacent layer 100% AD1
Barrier layer EVOH2
Adj acent layer 100% AD1
Outer layer same as inner layer

### See table 1

The thickness of the structure is 6/1.5/1.5/1.5/6 microns starting from the inner and going to the outer layer.

### See table 1

Tests
1. Tensile strength and elongation test is done according to ASTM D 882-09.
2. Odour test is done in the following way.

### TEST 1.

Tensile strength and elongation is measured as per ASTM D882-09.

MD stands for machine direction, whereas TD stands for transverse direction.

| EXAMPLE | TENSILE STRENGTH(MD) | ELONGATION (MD) | TENSILE STRENGTH(TD) | ELONGATION (TD) |
|---|---|---|---|---|
| 1 | 35 | 200 | 24 | 420 |
| 2 | 30 | 200 | 22 | 410 |
| | | | | |

### ODOUR TESTING

10 soiled diapers are put in a film of the present invention and also in a commercially sold film. The commercially sold film is a monolayer film.

The packs are put in PVDC comprising bags, so the odour cannot escape during the time of the evaluation.

The bags are opened 3 days after the soiling of the diapers and smell was evaluated by a 5 member panel.

The packs made from examples 1 and 2 were found substantially less smelly than the commercially sold ones.

## Claims

1. A multilayer degradable film suitable for malodorous item packaging having an outer and an inner layer both comprising at least one biodegradable polymer material where the weight of the film is less than 19 grams per square meter.

2. The multilayer film of claim 1, having more than 3 layers.

3. A multilayer film according to claim 1 or 2 wherein the film additionally comprises at least one of an oxygen barrier layer and two adhesive tie layers, one of said tie layers being arranged between the outer layer and the oxygen barrier layer and the other between the oxygen barrier layer and the inner layer.

4. A multilayer film according to one or more of the preceding claims wherein the multilayer film comprises an outer layer, an intermediate layer, a barrier layer, an intermediate layer and an inner layer.

5. A multilayer film according to one or more of the preceding claims wherein the biodegradable polymer material is a starch or a vegetable oil based polymer, optionally a blend of at least two biodegradable polymers.

6. A multilayer film according to one or more of the preceding claims wherein the weight of the film is less than 18g/m².

7. Use of the multilayer film of one or more of the preceding claims for packaging malodorous waste.

8. The use of claim 7, wherein the multilayer film is present in tubular form compressed in a cassette.

## Patentansprüche

1. Abbaubare Mehrschichtfolie, die zum Verpacken von übel riechendem Material geeignet ist und eine äußere und eine innere Schicht aufweist, die beide mindestens ein biologisch abbaubares Polymermaterial umfassen, wobei das Gewicht der Folie kleiner als 19 Gramm pro Quadratmeter ist.

2. Mehrschichtfolie nach Anspruch 1, die mehr als 3 Schichten aufweist.

3. Mehrschichtfolie nach Anspruch 1 oder 2, wobei die Folie zusätzlich eine Sauerstoffsperrschicht und/oder zwei Klebebindeschichten umfasst, wobei eine der Bindeschichten zwischen der äußeren Schicht und der Sauerstoffsperrschicht angeordnet ist und die andere zwischen der Sauerstoffsperrschicht und der inneren Schicht angeordnet ist.

4. Mehrschichtfolie nach einem oder mehreren der vorangehenden Ansprüche, wobei die Mehrschichtfolie eine äußere Schicht, eine Zwischenschicht, eine Sperrschicht, eine Zwischenschicht und eine innere Schicht umfasst.

5. Mehrschichtfolie nach einem oder mehreren der vorangehenden Ansprüche, wobei das biologisch abbaubare Polymermaterial ein Polymer auf Stärke- oder Pflanzenölbasis, optional ein Gemisch aus mindestens zwei biologisch abbaubaren Polymeren ist.

6. Mehrschichtfolie nach einem oder mehreren der vorangehenden Ansprüche, wobei das Gewicht der Folie kleiner als 18 g/m² ist.

7. Verwendung der Mehrschichtfolie eines oder mehrerer der vorangehenden Ansprüche zum Verpacken übel riechender Abfälle.

8. Verwendung nach Anspruch 7, wobei die Mehrschichtfolie in Form einer Röhre und in einer Kassette komprimiert vorliegt.

## Revendications

1. Film dégradable multicouches adapté à un emballage d'articles malodorants ayant une couche extérieure et une couche intérieure, toux deux comprenant au moins une matière polymère biodégradable, où le poids du film est inférieur à 19 grammes par mètre carré.

2. Film multicouches selon la revendication 1, ayant plus de 3 couches.

3. Film multicouches selon la revendication 1 ou 2, dans lequel le film comprend en outre une couche de barrière à l'oxygène et deux couches de liaison adhésives, l'une desdites couches de liaison étant disposée entre la couche extérieure et la couche de barrière à l'oxygène et l'autre entre la couche de barrière à l'oxygène et la couche intérieure.

4. Film multicouches selon l'une ou plusieurs des revendications précédentes, dans lequel le film multicouches comprend une couche extérieure, une couche intermédiaire, une couche de barrière, une couche intermédiaire, et une couche intérieure.

5. Film multicouches selon l'une ou plusieurs des revendications précédentes, dans lequel la matière polymère biodégradable est un polymère à base d'amidon ou à base d'huile végétale, facultativement un mélange d'au moins deux polymères biodégradables.

6. Film multicouches selon l'une ou plusieurs des revendications précédentes, dans lequel le poids du film est inférieur à 18 g/m².

7. Utilisation d'un film multicouches de l'une ou plusieurs des revendications précédentes pour emballer des déchets malodorants.

8. Utilisation selon la revendication 7, dans laquelle le film multicouches est présent sous forme tubulaire, comprimé dans un châssis.
